(19) Europäisches Patentamt / European Patent Office / Office européen des brevets

(11) **EP 2 461 329 A1**

(12) **EUROPEAN PATENT APPLICATION**
published in accordance with Art. 153(4) EPC

(43) Date of publication:
**06.06.2012 Bulletin 2012/23**

(51) Int Cl.:
***G21C 5/18*** *(2006.01)*        ***G21C 3/328*** *(2006.01)*
***G21C 5/00*** *(2006.01)*

(21) Application number: **10804585.7**

(22) Date of filing: **28.07.2010**

(86) International application number:
**PCT/JP2010/063130**

(87) International publication number:
**WO 2011/013841 (03.02.2011 Gazette 2011/05)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **31.07.2009 JP 2009179686**

(71) Applicant: **Tokyo Institute of Technology
Tokyo 152-8550 (JP)**

(72) Inventor: **SEKIMOTO, Hiroshi
Tokyo 152-8550 (JP)**

(74) Representative: **Intès, Didier Gérard André et al
Cabinet Beau de Loménie
158, rue de l'Université
75340 Paris Cedex 07 (FR)**

(54) **REACTOR CORE OF NUCLEAR REACTOR, AND NUCLEAR REACTOR**

(57)    A core of a nuclear reactor wherein the core is provided with a new fuel part 11 at which new fuel is loaded and a burning part 12 where the fuel burns, plutonium which is produced from uranium fissions to generate output, and the burning part 12 moves from the beginning to end of the burning cycle, wherein when dividing the core, which is substantially circular when viewed by a plan view, into a center part and a peripheral part, the new fuel part 11 is formed so that the weight of uranium per unit volume at the center part becomes smaller than the weight of uranium per unit volume at the peripheral part.

Fig.5

**Description**

Technical Field

The present invention relates to a core of a nuclear reactor and to a nuclear reactor.

Background Art

Nuclear reactors are used for electric power generating facilities. Nuclear reactors include fast neutron reactors. Fast neutron reactors are nuclear reactors which mainly use fast neutrons to cause fission of fissionable nuclides to generate output. Sodium, lead-bismuth alloys, and other heavy metals and, further, gas are used to cool the core. In nuclear reactors of the prior art, fission occurs at the core as a whole to generate output.

The criticality of the core of a nuclear reactor is maintained and the output is adjusted by for example control rods. The control rods are formed by a material which easily absorbs neutrons. At the start of a burning cycle, when inserting control rods into the core, along with the progress in burning, the control rods are gradually withdrawn so as to maintain the critical state while maintaining output. In this way, in operation of a nuclear reactor, control is necessary for maintaining the criticality of the nuclear reactor. Control is performed for maintaining the criticality on a continuous basis from the start of the burning cycle to the end of the burning cycle.

Japanese Patent No. 3463100 discloses a nuclear reactor in which control for maintaining the criticality in the burning cycle is unnecessary. This nuclear reactor employs the burning method called CANDLE (Constant Axial Shape of Neutron Flux, Nuclide Densities and Power shape During Life of Energy Production) burning. In CANDLE burning, the core can be divided into a generally new fuel part, burning part, and burned up part. The burning part moves toward the new fuel part by a speed proportional to output along with burning. In CANDLE burning, after a single burning cycle is ended, fuel is replaced for the next burning cycle. When replacing the fuel, the burned up fuel can be taken out in the core axial direction and new fuel can be loaded in the end at the opposite side to the end at the taken out side.

In CANDLE burning, there is no need for adjustment of criticality. Further, even if not adjusting the power distribution, the power distribution is maintained substantially constant. For this reason, there is the feature that from the beginning to the end of the burning cycle, there is no need for control of the reactivity of the core such as manipulation of the control rods. Further, there is the feature that the reactivity coefficient does not change and it is not necessary to change the method of operation together with burning.

Citation List

Patent Literature

PLT 1: Japanese Patent No. 3463100

Summary of Invention

Technical Problem

By employing CANDLE burning as the method of burning fuel at a nuclear reactor, it is possible to provided a nuclear reactor in which the core properties can be maintained substantially constant even when burning progresses, control of the operation becomes simple, and the probability of accidents is low. Further, there is no need to arrange control rods in the core, so there is no possibility of accidents where the control rods are mistakenly pulled out during the operating period. Further, the burnup when taking out the fuel is high, so it is possible to reduce the amount of waste.

In CANDLE burning, as the new fuel for the second cycle and on, it is possible to use natural uranium or depleted uranium alone for operation. These fuels are subcritical, so are easy to transport and store. Further, it is possible to utilize about 40% of the uranium as energy without enrichment or reprocessing, so resources can be effectively utilized. Further, since the new fuel of the second cycle and on does not require enrichment, reprocessing, etc., there is the feature of a high proliferation resistance.

In this regard, in CANDLE burning, in general, output is generated across substantially the entire diametrical direction of the core. At this time, with the conventional CANDLE burning, the power density becomes high at the center part in the diametrical direction, while the power density becomes lower toward the peripheral part. For this reason, there was the problem that, at the peripheral part, the power density with respect to the cooling ability becomes smaller and it is not possible to achieve a large power density in accordance with the cooling ability.

In the conventional CANDLE burning, the progress in burning becomes faster at the center part in the diametrical direction where the power density is high. The amount of fuel taken out and the amount of fuel loaded are constant in the diametrical direction, so the burning part shifts more to the new fuel part at the center part than the peripheral part. For this reason, there was the problem that it necessary to increase the length of the core in the axial direction in order to sufficiently include the burning part in the core.

The present invention has as its object the provision of a core of a nuclear reactors which can sufficiently raise the power density of the peripheral part in the diametrical direction to be the same as the center part, which can raise the average power density of the core, which can sufficiently burn the fuel of the peripheral part in addition to the center part of the fuel in the diametrical direction, and which can shorten the axial direction length of the core and the provision of a nuclear reactor provide with this core.

Solution to Problem

A first core of a nuclear reactor of the present invention is a core of a nuclear reactor wherein the core is provided with a new fuel part at which new fuel is loaded and a burning part which is arranged at one side of the new fuel part and which generates neutrons to enable the fuel to burn, the new fuel includes at least one type of uranium from among natural uranium and depleted uranium, the uranium absorbs neutrons to generate plutonium which fissions to generate output, and the burning part moves in a direction toward the new fuel part while maintaining a substantially constant shape from the beginning to end of the burning cycle, wherein, when dividing the core, which is substantially circular when viewed by a plan view, into a center part and a peripheral part, the new fuel part is formed so that the weight of uranium per unit volume at the center part becomes smaller than the weight of uranium per unit volume at the peripheral part.

In the above invention, the new fuel part preferably has a weight of uranium per unit volume of the core which becomes gradually smaller in the direction from the peripheral part toward the center part.

In the above invention, preferably the core is provided with fuel assemblies which have fusel parts, among the fuel assemblies which are loaded at the center part and the fuel assemblies which are loaded at the peripheral part, at least the fuel assemblies which are loaded at the center part contain a mixture of uranium and thorium at the new fuel part, and the content rate of uranium at the new fuel part of the fuel assemblies which are loaded at the center part is smaller than the content rate of uranium at the new fuel part of the fuel assemblies which are loaded at the peripheral part.

In the above, invention, preferably the core is provided with support members for supporting the fuel and the weight of the support members per unit volume of the center part is larger than the weight of the support members per unit volume of the peripheral part.

In the above invention, preferably coolant flows at the center part and the peripheral part and the amount of the coolant per unit volume of the center part is larger than the amount of coolant per unit volume of the peripheral part.

The first nuclear reactor of the present invention is provided with the above first core of the nuclear reactor and a reactor vessel inside of which the core is arranged.

The second core of a nuclear reactor of the present invention is a core of a nuclear reactor wherein the core is provided with a new fuel part at which new fuel is loaded and a burning part which is arranged at one side of the new fuel part and which generates neutrons to enable the fuel to burn, the new fuel includes at least one type of uranium from among natural uranium and depleted uranium, the uranium absorbs neutrons to generate plutonium which fissions to generate output, and the burning part moves in a direction toward the new fuel part while maintaining a substantially constant shape from the beginning to end of the burning cycle, wherein the new fuel part contains at least one core component among component substances of fuel pellets other than uranium, support members for supporting the fuel, and a coolant. When dividing the core, which is substantially circular when viewed in a plan view, into a center part and a peripheral part, the core components of the new fuel part are formed to become larger in infinity neutron multiplication factor of the peripheral part compared with the center part.

In the above invention, the core components of the new fuel part are formed so that the infinite neutron multiplication factor gradually becomes smaller in the direction from the peripheral part toward the center part.

The second nuclear reactor of the present invention is provided with the above second core of the nuclear reactor and a reactor vessel inside of which the core is arranged.

Advantageous Effects of Invention

According to the present invention, it is possible to provide a core of a nuclear reactor which can raise the average power density of the core, which can sufficiently burn the fuel of the peripheral part in addition to the center part of the fuel in the diametrical direction, and which can shorten the axial direction length of the core and to provide a nuclear reactor provided with this core.

Brief Description of Drawings

FIG. 1 is a schematic view of a nuclear reactor in an embodiment.
FIG. 2 is a schematic plan view of a core of a nuclear reactor in an embodiment.
FIG. 3 is a schematic perspective view, of a fuel assembly in an embodiment.
FIG. 4 is a schematic perspective view of a fuel rod in an embodiment.
FIG. 5 is a schematic view for explaining the configuration of the core and the burned state of the fuel in an embodiment.
FIG. 6 is a graph explaining the change in the infinite neutron multiplication factor with respect to the neutron fluence of fuel at the time of CANDLE burning.
FIG. 7 is a graph which explains the relationship between the core height and the infinite neutron multiplication factor of fuel.
FIG. 8 is a view which explains change in power density of the core and replacement of fuel in an embodiment.
FIG. 9 is an explanatory view of the power density in the burning part of the core in an embodiment.
FIG. 10 is an explanatory view of the power density in a burning part of the core of a comparative example.
FIG. 11 is a schematic view which explains the configuration of the core of a comparative example and the burned state of fuel.
FIG. 12 is a graph which explains the power density of a core and the coolant temperature at the core outlet.
FIG. 13 is a schematic plan view of another core of a nuclear reactor in the embodiment.
FIG. 14 is a schematic plan view of still another core of a nuclear reactor in the embodiment.

Description of Embodiments

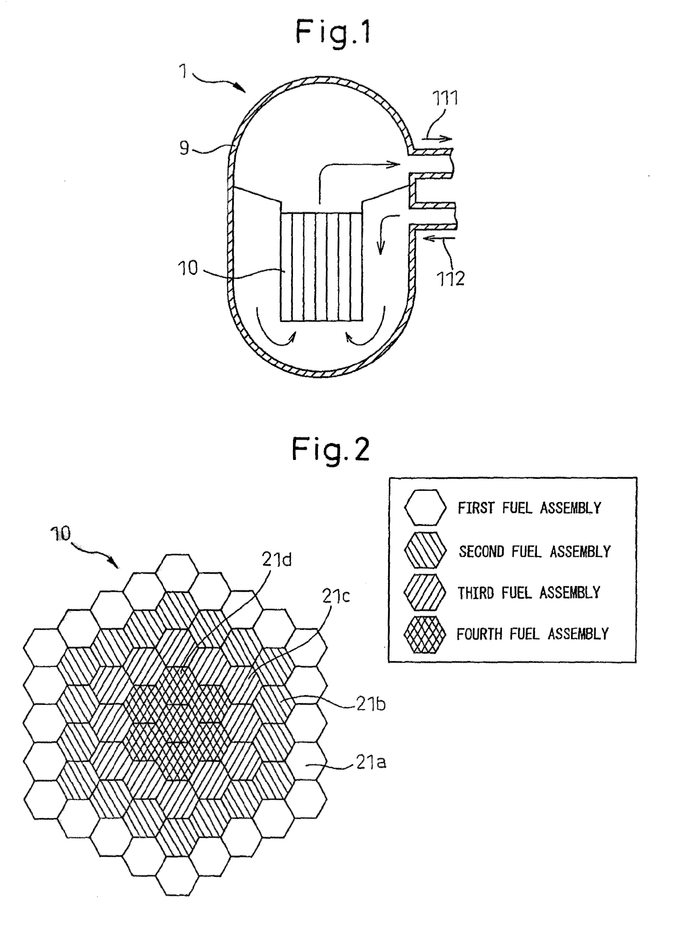

Referring to FIG. 1 to FIG. 14, a core of a nuclear reactor and a nuclear reactor which is provided with this core in an embodiment will be explained. The nuclear reactor in the present embodiment is a fast neutron reactor which can use fast neutrons to cause fission of plutonium. The nuclear reactor in the present embodiment is a nuclear reactor of a electric power generating facility and generates electric power by the heat of the coolant which flows out from the nuclear reactor.

FIG. 1 is a schematic view of a nuclear reactor in the present embodiment. The electric power generating facility in the present embodiment is provided with a nuclear reactor 1. The nuclear reactor 1 includes a reactor vessel 9. The nuclear reactor 1 includes a core 10 which is arranged inside of the reactor vessel 9. The core in the present invention means the part in which at least one of uranium and thorium is arranged. The core sometimes contains products produced from the uranium and thorium. Inside of the reactor vessel 9, coolant flows. In the present embodiment, no reflecting material is arranged around the core 10, but the invention is not limited to this. A reflecting material may also be arranged around the core 10.

The coolant, as shown by the arrow 112, flows into the reactor vessel 9 and passes through the inside of the core 10. The heat of the core 10 is transmitted to the coolant. In the nuclear reactor 1 in the present embodiment, the coolant flows from the bottom side to the top side of the core 10. The coolant which flows out from the core 10 flows out from the reactor vessel 9 as shown by the arrow 111.

For the coolant, it is possible to use a material with a small neutron moderating ability or neutron absorption ability. In the present embodiment, a lead-bismuth coolant is used. In the present embodiment, the coolant has the function of a reflecting material. As the coolant of the nuclear reactor, in addition to a lead-based coolant (liquid metal), it is possible to use sodium. Further, it is possible to use helium or another gas coolant. Further, as the lead-based coolant, it is possible to employ lead alone in addition to lead-bismuth or the separated isotope lead 208.

FIG. 2 is a schematic plan view of the core of a nuclear reactor in the present embodiment. In the core 10, fuel assemblies 21a to 21d are loaded. In the core of the nuclear reactor in the present embodiment, the fuel assemblies are regularly arranged. The core 10 in the present embodiment is formed so as to become substantially circular when viewed by a plan view. The core of the nuclear reactor is not limited to this. It may be formed into any geometric shape or circular shape becoming substantially circular when viewed by a plan view.

The fuel assemblies in the present embodiment has a first fuel assembly 21a which contains a first fuel, a second fuel assembly 21b which contains a second fuel, a third fuel assembly 21c which contains a third fuel, and a fourth fuel assembly 21d which contains a fourth fuel

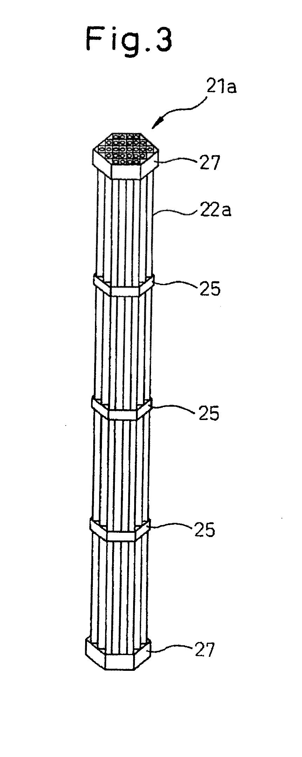

FIG. 3 is a schematic perspective view of a fuel assembly in the present embodiment. In the following illustration, the first fuel assembly 21a will be explained, but the second fuel assembly 21b, the third fuel assembly 21c, and the fourth fuel assembly 21d also are configured in the same way other than the ingredients of the fuel.

Each first fuel assembly 21a includes a plurality of fuel rods 22a. The fuel rods 22a are supported by nozzles 27 at their longitudinal direction ends. The fuel rods 22a are supported by a plurality of support grids 25. The nozzles 27 and the support grids 25 support the fuel rods 22a to be separated from each other. In the present embodiment, the support grids are used to maintain the distance between the fuel rods, but the invention is not limited to this. Instead of support grids, it is also possible to use wire spacers etc. The coolant flows between the fuel rods 22a and cools the fuel rods 22a.

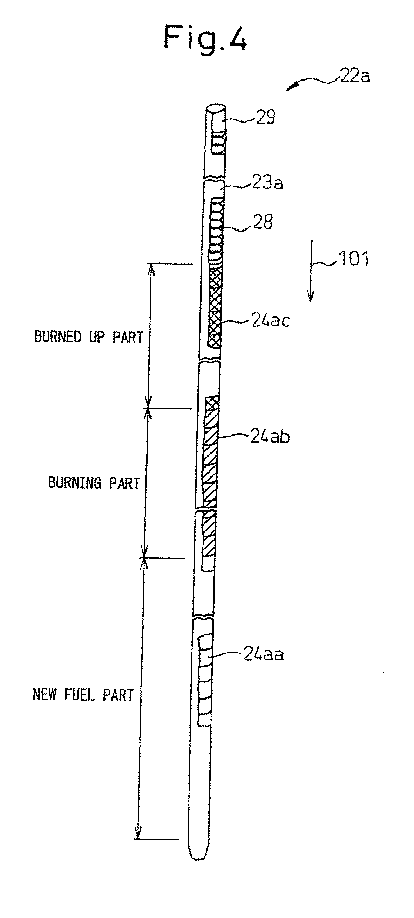

FIG. 4 is a schematic perspective view of a fuel rod in the present embodiment. FIG. 4 shows a fuel rod which burns from the top side toward the bottom side. Part of the cladding material is shown cut away. The fuel rod 22a in the present embodiment includes a cladding material 23a. The cladding material 23a is formed in a tubular shape. The cladding material 23a is, for example, formed by stainless steel. The fuel rod 22a contains first fuel comprised of fuel pellets 24aa, 24ab, and 24ac. The fuel pellets 24aa, 24ab, and 24ac are arranged inside the cladding material 23a. The fuel rod 22a is sealed by a cap 29. The fuel pellets 24aa, 24ab, and 24ac are pushed down by a coil spring 28.

The fuel rod shown in FIG. 4 shows the state at the beginning of a burning cycle. A plurality of fuel pellets 24aa, 24ab, and 24ac are arranged in the order of fuel pellets 24aa containing new fuel, fuel pellets 24ab in the middle of burning, and fuel pellets 24ac fully burned up. The new fuel part of the core is defined by the part of the fuel pellets 24aa containing new fuel. The burning part of the core is defined by the part of the fuel pellets 24ab in the middle of burning. The burned up part of the core is defined by burned up fuel pellets 24ac.

In this way, in the fuel rod 22a in the present embodiment, fuel pellets 24aa, 24ab, 24ac of different burnup are arranged. After the end of one burning cycle, for example, the cladding material 23a is stripped off and the fuel pellets of the burned up part and the other fuel pellets are separated. Next, fuel pellets containing new fuel and the recovered fuel pellets are arranged inside a new cladding material, whereby it is possible to form a fuel rod for the next burning cycle.

Further, as the method of recovering fuel pellets, it is also possible to cut the fuel rod at each part, then strip off the cladding material 23a. This method may also be used to remove fuel pellets which were arranged at the burning part and burned up part.

Referring to FIG. 2 and FIG. 4, the fuel pellets 24aa which are arranged in the new fuel part of the first fuel assemblies 21a do not include thorium, but include natural uranium. The fuel pellets which are arranged at the new fuel parts of the second fuel assemblies 21b, third fuel assemblies 21c, and fourth fuel assemblies 21d include thorium instead of part of natural uranium. That is, the fuel pellets which are arranged in the new fuel parts of the second fuel assemblies 21b, third fuel assemblies 21c, and fourth fuel assemblies 21d contain mixtures of uranium and thorium. The fuel in the present embodiment is a metal fuel, but the invention is not limited to this. For example, it is also possible to use a nitride fuel etc.

These fuel assemblies differ in weight of the uranium of the new fuel. The fuels of the first fuel assemblies, second fuel assemblies, third fuel assemblies, and fourth fuel assemblies are formed so that the weight of uranium per unit volume of the new fuel becomes smaller in that order. Further, the new fuels of the first fuel assemblies, second fuel assemblies, third fuel assemblies, and fourth fuel assembly are formed so that the weight of thorium per unit volume of the fuel becomes larger in that order.

The first fuel assemblies 21a are arranged at the outermost circumference of the core 10. At the inside of the ring shaped region at which the first fuel assemblies 21a are arranged, the second fuel assemblies 21b are arranged. At the inside of the ring shaped region at which the second fuel assemblies 21b are arranged, the third fuel assemblies 21c are arranged. At the inside of the ring shaped region at which the third fuel assemblies 21c are arranged, the fourth fuel assemblies 21d are arranged. At the axis of the core 10, the fourth fuel assemblies 21d are arranged. In this way, the core of the present embodiment has ring shaped regions of loaded fuel assemblies.

In the present embodiment, the fuel assemblies are the same in shape. The fuel assemblies are arranged regularly at predetermined intervals at the core. The weight of uranium per unit volume of the core becomes gradually smaller along the direction from the peripheral part toward the center part. Here, the "unit volume of the core" (unit volume of center part or unit volume of peripheral part) the unit volume including not only the fuel, but also the cladding material, coolant, and other materials forming the core.

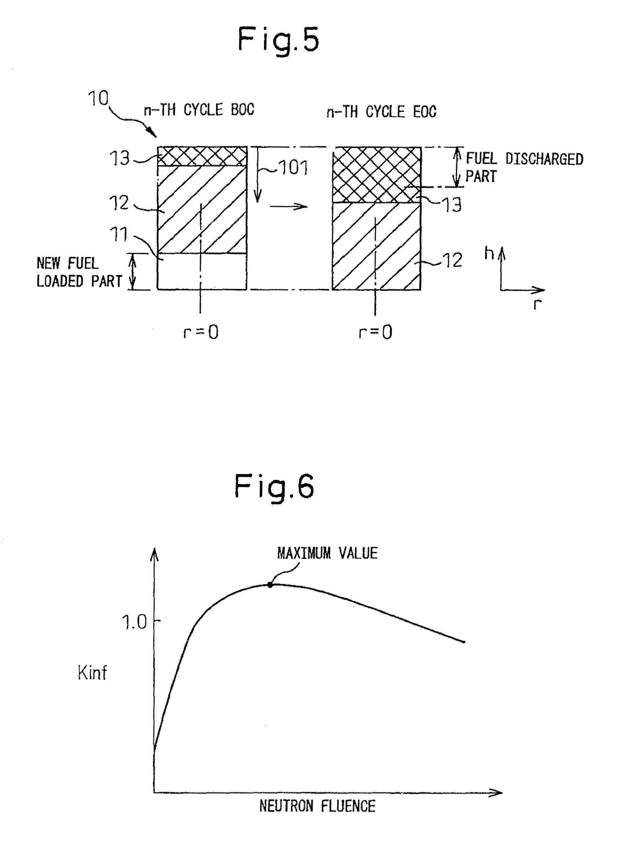

FIG. 5 is a schematic view, for explaining the state of progress of burning of the core in the present embodiment. FIG. 5 is a schematic cross-sectional view when cutting the core along the axial direction. FIG. 5 shows a core at the beginning of cycle (BOC) of the n-th cycle and a core of the end of cycle (EOC) of the n-th cycle after a plurality of burning cycles. Further, it shows a core after a plurality of cycles of operation by the same cycle length and same fuel replacement method.

The nuclear reactor in the present embodiment is a nuclear reactor in which the burning part 12 moves toward the new fuel part 11 from the beginning to end of the burning cycle. That is, the core of the present embodiment performs CANDLE burning. The velocity of movement of the burning part 12 is roughly proportional to the power density and is inversely proportional to the fuel atomic number density.

The core 10 in the present embodiment includes the new fuel part 11, burning part 12, and burned up part 13. The new fuel part 11 is the part at which new fuel is arranged. The burning part 12 is a part at which neutrons are spontaneously produced and the fuel burns. At the burning part 12, fission occurs whereby output is substantially produced. The burned up part 13 is a part which has burned up and almost no output is bering produced. At the core at the beginning of the n-th cycle, the new fuel part 11 is arranged at the bottom part of the core 10. The burning part 12 is arranged at the upper side of the new fuel part 11. At the burning part 12, fuel which already began burning at the previous cycle is arranged. In the present embodiment, a burned up part 13 is arranged at the core 10 at the beginning of a cycle, but the invention is not limited to this. A burned up part 13 need not be arranged.

At the new fuel part 11, fuel pellets containing new fuel are arranged. Further, as explained above, at the new fuel part 11, fuel assemblies are arranged so that the content rate of uranium gradually becomes smaller from the peripheral part to the center part of the core. The axis where the position r in the diametrical direction is zero is the core axis. When viewing the core by a plan view, the fuel assemblies are arranged so that the weight of uranium per unit volume of the core is the smallest at the core axis and the weight of uranium per unit volume of the core gradually increases toward the peripheral part.

In the present embodiment, the burning part 12 arranged at the beginning of cycle becomes the part where burning is started. The fuel starts to burn from the burning part 12 and, as shown by the arrow 101, proceeds to burn in a direction toward the new fuel part 11. When the burning of n-th cycle proceeds and the end of cycle is reached, the burning part 12 proceeds down to the bottom end of the core 10. In the present embodiment, the burning is continued until the new fuel part 11 is consumed. At the end of the burning cycle, the new fuel part 11 may remain.

FIG. 6 is a graph which explains the relationship between the neutron fluence of fuel and infinite neutron multiplication factor in the present embodiment. The abscissa indicates the neutron fluence obtained by integrating the neutron flux over time, while the ordinate indicates the infinite neutron multiplication factor kinf. The neutron fluence is a quantity corresponding to the burnup of fuel for example. In the present embodiment, natural uranium is used as fuel. Natural uranium contains about 99.3% of uranium 138 and about 0.7% of uranium 235. Uranium 238 absorbs neutrons and nuclear transformation occurs as shown in the following formula 1. Uranium 238 is transformed to plutonium 239.

$$(\text{Formula 1})$$
$$^{238}_{92}U + n \rightarrow \,^{239}_{92}U \xrightarrow{\beta-\text{decay}} \,^{239}_{93}Np \xrightarrow{\beta-\text{decay}} \,^{239}_{94}Pu$$

In the vicinity of zero neutron fluence, uranium 238 absorbs neutrons whereby plutonium 239 is produced. Due to this, the infinite neutron multiplication factor rises. When reaching a predetermined neutron fluence, fission products (FP) build up. Further, the ratio of the amount of plutonium 239 etc. to the amount of uranium 238 approaches a constant one and the infinite neutron multiplication factor is gradually reduced. In this way, the fuel in the present embodiment has the property that the infinite neutron multiplication factor increases at the beginning of burning and the infinite neutron multiplication factor gradually decreases after that.

Further, the subcriticality of natural uranium is large, so to make part of the core critical or more, a large amount of neutrons have to be made to be absorbed at the uranium 238. In the present embodiment, the core size is selected and the fuel assemblies and fuel rods are designed so as to satisfy these conditions.

By employing such a core configuration, it is possible to perform CANDLE burning. That is, it is possible to form a core wherein output is produced over the entire diametrical direction of the core and wherein a burning part is formed in part of the region in the axial direction of the core.

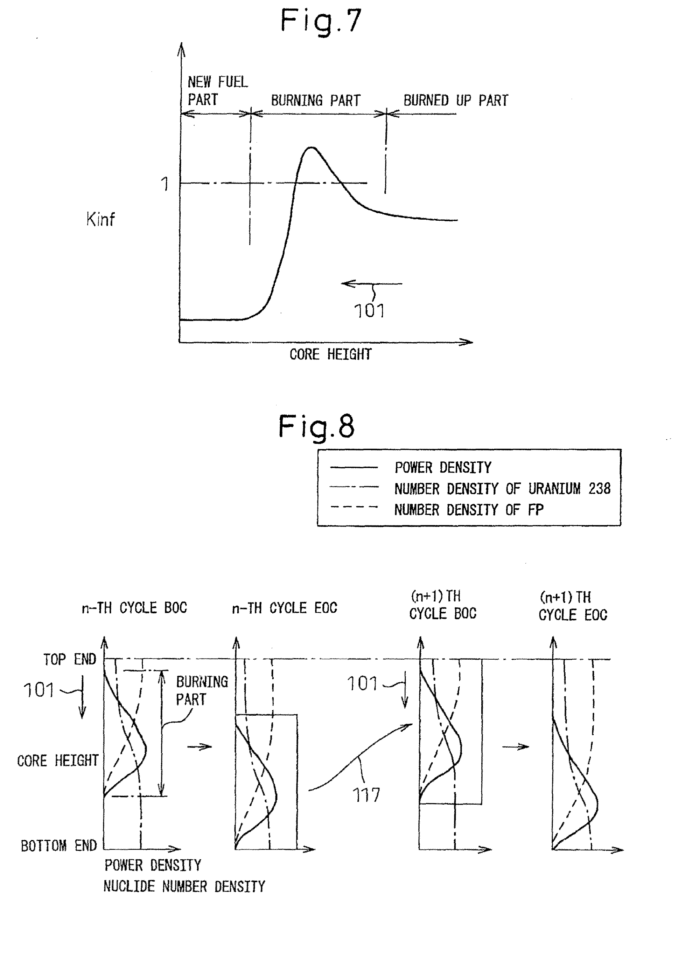

FIG. 7 shows a graph of the infinite neutron multiplication factor when burning fuel by an infinite core height. The abscissa indicates the core height, while the ordinate indicates the infinite neutron multiplication factor of fuel. In the present embodiment, as shown by the arrow 101, the burning part moves toward the fuel part. The burning part includes a region with an infinite neutron multiplication factor of over 1. The height of a core of an actual nuclear reactor is finite. In this case, the infinite neutron multiplication factor at the end of the core is slightly off from the graph shown in FIG. 7.

FIG. 8 is a graph which explains the state of progress of burning of the core and fuel replacement in the present embodiment. FIG. 8 shows a graph of a core at the beginning and end of the n-th cycle and a graph of a core at the beginning and end of the (n+1) th cycle. In the graphs, the power density at the core axis, the number density of uranium 238, and the number density of fission products are shown.

Referring to FIG. 5 and FIG. 8, the maximum point of the power density, as shown by the arrow 101, moves toward the bottom of the core where the new fuel part 11 is arranged.

The burning part in the present embodiment moves in a direction from the top end to the bottom end of the core. The velocity at which the burning part moves, that is, the velocity at which the maximum point of the power density moves, is, for example, several cm a year. In this way, the burning part slowing moves. The number density of uranium 238 is made smaller at the downstream side of the burning part due to nuclear transformation. Further, the number density of the fission products becomes larger at the downstream side of the burning part due to fission. In the present embodiment, the fuel finishes burning when the burning part reaches the substantial bottom end of the core.

At the core at the beginning of the (n+1)th cycle, as shown by the arrow 117, the burning part which is arranged at the bottom part of the core at the n-th cycle is arranged at the top part of the core and is used as the part for starting burning. At the core at the (n+1)th cycle, a new fuel part 11 is newsy arranged at the bottom of the core. By replacing the fuel in this wary, it is possible to burn fuel in the way as the n-th cycle, in the core at the (n+1)th cycle as well.

The core in the present embodiment is loaded with fuel containing thorium. The nuclear reaction of thorium is shown in the following formula 2.

$$(\text{Formula 2})$$
$$^{232}_{90}\text{Th} + n \rightarrow \,^{233}_{90}\text{Th} \xrightarrow{\;\beta-\text{decay}\;} \,^{233}_{91}\text{Pa} \xrightarrow{\;\beta-\text{decay}\;} \,^{233}_{92}\text{U}$$

The thorium 232 is transformed to uranium 233 by absorbing neutrons and repeating $\beta$ decay. Uranium 233 is a fissionable nuclide. The maximum value of the infinite neutron multiplication factor of a fuel assembly containing thorium instead of uranium becomes smaller than the infinite neutron multiplication factor of a fuel assembly containing only uranium. Here, the "maximum value of the infinite neutron multiplication factor" is the infinite neutron multiplication factor which becomes the maximum during the change of the infinite neutron multiplication factor accompanying burning (see FIG. 6). The greater the ratio of thorium contained in the new fuel, the smaller the maximum value of the infinite neutron multiplication factor. By adjusting the ratio of the thorium, it is possible to adjust the infinite neutron multiplication factor of the fuel assembly.

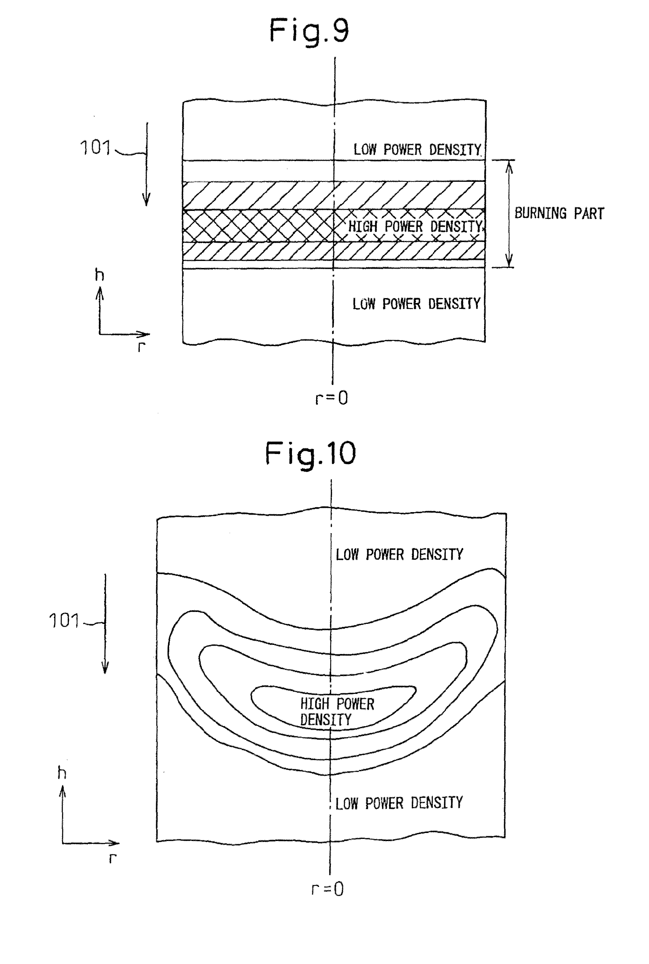

FIG. 9 is a graph of the power density of the burning part at the core in the present embodiment. FIG. 9 is a schematic cross-sectional view when cutting the core along the axial direction and shows the lines of the same power density (contour lines). The core in the present embodiment is gradually decreased in the weight of uranium per unit volume of the core from the peripheral part to the center part in the diametrical direction of the core. Further, it is gradually increased in content rate of thorium from the peripheral part to the center part in the diametrical direction of the core. For this reason, the contour lines all extend vertical to the core axis and become substantially flat. The power density becomes substantially constant in the diametrical direction. The value of the power density integrated in the axial direction can be flattened in the diametrical direction. That is, the powder distribution in the diametrical direction can be made substantially constant. Further, the amount of irradiation of the fuel by neutrons becomes substantially constant across the diametrical direction. Further, the burnup of fuel per unit time becomes substantially constant across the diametrical direction.

In this regard, in CANDLE burning, the fuel which is loaded at the core can be made completely the same composition. For example, it is also possible to form the core using only fuel assemblies containing certain amounts of natural uranium and not containing any thorium. Here, as a comparative example, the case of a core configured by only fuel assemblies containing certain amounts of natural uranium and not containing any thorium will be explained.

FIG. 10 is a graph of the power density of the burning part in the core of the comparative example. The power density becomes smaller toward the outside in the diametrical direction. Further, position of the burning part in the axial direction is made a position retarded toward the outside in the diametrical direction, that is, upward.

FIX. 11 is a schematic view of the core of the comparative example. In the core of the comparative example, the burning part becomes more of a projecting shape the further toward the direction of progress. For this reason, the fuel which is arranged at the peripheral part in the diametrical direction is taken out regardless of whether it is fully burned up. The discharge burnup of the fuel arranged at the peripheral part of the core becomes smaller. In particular, when the height of the core is small, the discharge burnup of the fuel ends up become smaller.

Referring to FIG. 9, in the core of the present embodiment, the power density in the diametrical direction is substantially constant, so the fuel is burned substantially uniformly from the center part to the peripheral part of the core. The position of the burning part in the axial direction becomes substantially constant regardless of the position in the diametrical direction. For this reason, even the fuel which is arranged at the peripheral part of the core can be fully burned with a short core height. As a result, the discharge burnup of the fuel can be raised.

Further, in CANDLE burning, the discharge burnup of the fuel becomes higher compared with the conventional burning method. For this reason, the fuel assemblies are irradiated with a large amount of neutrons. That is, sometimes the fast neutron fluence by which the fuel assemblies are irradiated becomes extremely large and the amount of irradiation of the fuel support members by neutrons exceeds the allowable amount. In such a case, it is possible to temporarily take out the fuel assemblies, replace the fuel support members, and again load the fuel assemblies in the core. The fuel support members are the component members for supporting the fuel. The cladding material and the support grids may be illustrated.

In the core of the comparative example, after operation for a certain time, the fast neutron fluence irradiating the fuel assemblies arranged at the center part becomes larger, while the fast neutron fluence irradiating the fuel assemblies arranged at the peripheral part becomes smaller. For this reason, when replacing the support members, the fuel support members have to be replaced at the fuel assemblies loaded at the peripheral part regardless of the fact the amount of irradiation by fast neutrons is small. Further, when taking out fuel assemblies of the center part from the core and replacing the support members, it is possible to reload them without replacing the support members of the fuel assemblies loaded at the peripheral part, but in this case, it is necessary to replace the support members of the fuel assemblies at the peripheral part after a predetermined burning period.

As opposed to this, in the core of the present embodiment, the irradiated fast neutron fluence becomes substantially the same between the fuel assemblies which are arranged at the center part and the fuel assemblies which are arranged at the peripheral part. The judgment valuers of fast neutron fluence for replacing the support members are reached at substantially the same timing. For this reason, by a single takeout operation, it is possible to replace the support members of the fuel assemblies at the center part and the peripheral part. Further, it is possible to replace the support members at the optimal timing. In this way, the core in the present embodiment enables efficiently replacement of the support members of the fuel.

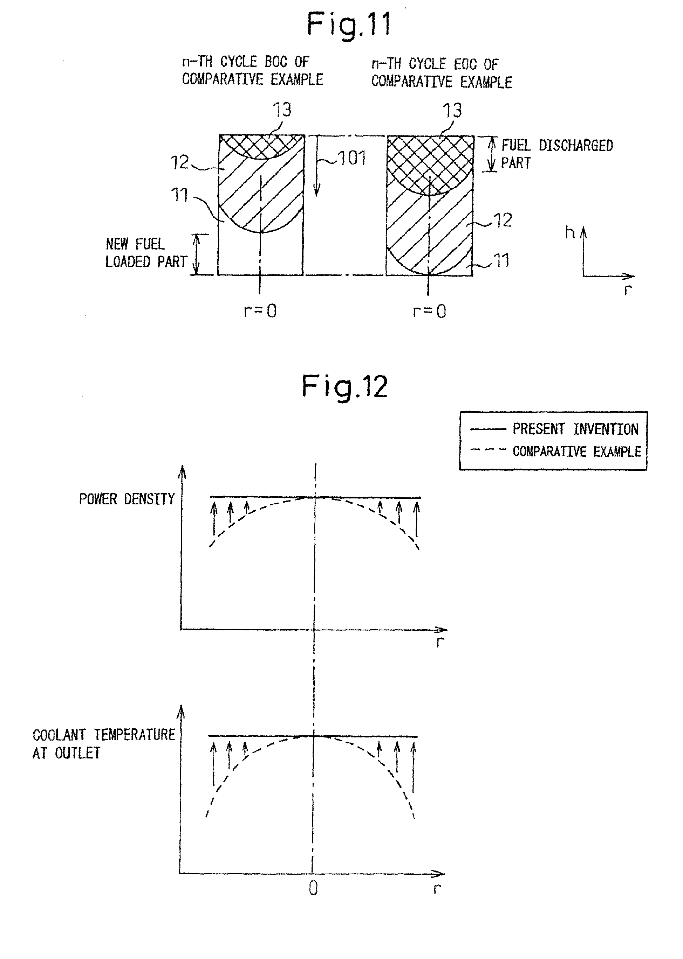

FIG. 12 shows a graph of the power density and the temperature of the coolant at the outlet of the core. In FIG. 12, a graph of the core in the present embodiment and the core of the comparative example is shown. The core is sometimes restricted in maximum temperature at predetermined parts. For example, sometimes the maximum temperature of the fuel is restricted. In such a case, the core is designed and controlled so that among the plurality of fuel assemblies, the temperature of fusel becoming highest in temperature does not exceed an allowable temperature. Sometimes for example the temperature of the coolant of the core outlet is restricted so that the fuel does not exceed the allowable temperature.

In the core of the comparative example, the distribution of the power density become an convey shape, so when the flow rate of the coolant is constant in the diametrical direction, the temperature of the fuel becomes highest at the core axis (r=0). The temperature of the coolant at the outlet of the core becomes highest on the core axis when the flow rate of the coolant is constant in the diametrical direction. The core of the comparative example is designed and controlled so that the temperature of the coolant on the core axis does not exceed an allowable temperature. At this time, the power density of the peripheral part of the core becomes smaller than the power density on the core axis. The output of the core as a whole also becomes smaller. Further, the temperature of the coolant at the outlet of the core of the peripheral part of the core becomes lower than the temperature of the coolant at the outlet on the core axis when the flow rate of the coolant is constant in the diametrical direction. The temperature of the coolant at the outlet of the core at the core as a whole (temperature of coolant at outlet of reactor vessel) becomes lower and the heat efficiency of electric power generation also becomes lower.

Note that, by changing the flow rate of the coolant in the diametrical direction, it is possible to make the temperature of the coolant at the outlet of the core the maximum allowable temperature at all positions in the diametrical direction. It is possible to raise the temperature of the coolant at the outlet of the core over the core as a whole and possible to raise the heat efficiency of electric power generation. However, in this case as well, in the core of the comparative example, the output of the core as a whole remains small.

As opposed to this, in the core of the present embodiment, it is possible to make the power density in the diametrical direction substantially constant, so even if there is a predetermined restriction such as the temperature of the fuel the same as the core of the comparative example, it is possible to increase the outlet of the peripheral part of the core. It is therefore possible to increase the output of the core as a whole. As a result, it is possible to increase the output per unit volume of the core. Further, it is possible to raise the average power density of the core. Further, in the core in the present embodiment, it is possible to make the temperature of the coolant at the outlet of the core the maximum allowable temperature at all positions in the diametrical direction. As a result, it is possible to raise the temperature of the coolant at the outlet of the core over the entire core (temperature of coolant at outlet of reactor vessel) and to raise the heat efficiency of electric power generation.

In this regard, in several cases of the core in the present embodiment, the weight of uranium per unit volume of the core is changed along the diametrical direction. The density of plutonium and other fissionable nuclides produced from uranium changes in the diametrical direction. For this treason, sometimes the velocity of progress of the burning part differs at positions in the diametrical direction. For example, sometimes the burning velocity of the burning part at the center part becomes slightly faster than the burning velocity of the burning part at the peripheral part. As a result, sometimes the position of the burning part in the axial direction deviates slightly between the center part and the peripheral part.

In the case of this core, the fuel can be replaced so that the position of the burning part in the axial direction becomes substantially the same across the diametrical direction of the core. Referring to FIG. 5 and FIG. 8, the length in the axial direction of the part newsy loaded in the fuel part 11 becomes equal to the length of the part from which fuel is taken out in the burned up part 13. In the core in the present embodiment, when replacing fuel, it is possible to change the amount of fuel taken out and the amount of new fuel loaded in the diametrical direction. For example, it is possible to change the number of fuel pellets 24ac taken out at the burned up part and the number of fuel pellets 24aa newly loaded into the new fuel part according to the position in the diametrical direction.

By employing this method of replacing fuel, it is possible to keep the position of the burning part in the axial direction from deviating in the diametrical direction. For example, when the burning velocity of the center part of the core is faster than the peripheral part, it is possible to increase the amount of replacement of the center part over the amount of replacement of the peripheral part so as to keep the position of the burning part in the axial direction from deviating in the diametrical direction.

In the present embodiment, the content rate of thorium is made to gradually increase the further from the peripheral part toward the center part in the diametrical direction of the core and simultaneously the weight of uranium per unit volume of the core is made to gradually decrease, but the invention is not limited to this. As shown in FIG. 9, the core may be configured so that the power density becomes substantially constant in the diametrical direction at the burning part. Further, the new fuel part of the first fuel assembly of the core in the present embodiment does not contain thorium, but the invention is not limited to this. The first fuel assembly may also contain thorium.

Further, when dividing the core which is substantially circular when viewed by a plan view, into a center part and peripheral part, the new fuel part may have a weight of uranium per unit volume of the center part smaller than the weight of uranium per unit volume of the peripheral part. By employing this configuration, it is possible to make the power density approach a substantially constant one in the diametrical direction. Even if shortening the axial direction length of the core, it is possible to sufficiently burn the fuel at the peripheral part.

As the method for dividing the core into a center part and a peripheral part, for example, it is possible to define the center part and the peripheral part at a position of about half of the length in the diametrical direction of the core. At this time, the boundary line between the center part and the peripheral part can be formed along the outer shape when viewing the core by a plan view. The weight of uranium per unit volume at the center part can be calculated by (total weight of uranium arranged at center part of core)/(volume of center part of core). The weight of uranium per unit volume at the peripheral part can be similarly calculated.

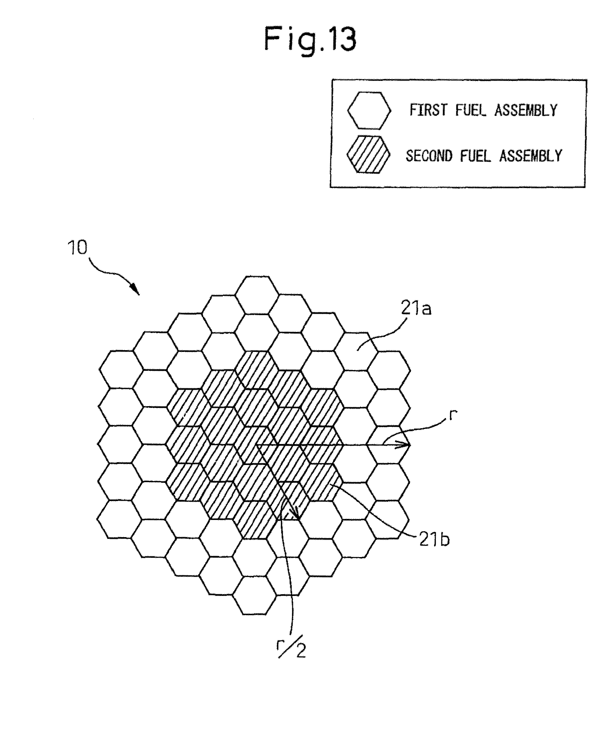

FIG. 13 is a schematic plan view of another core in the present embodiment. In the other core 10, an inside region and an outside region are defined at the position of about half (r/2) of the length r in the diametrical direction. The boundary line between the inside region and the outside region is parallel to the outer shape when viewing the core 10 by a plan view. In the example shown in FIG. 13, the inside region corresponds to the center part, while the outside region corresponds to the peripheral part. At the inside region, second fuel assemblies 21b containing uranium and thorium in the new fuel are loaded, while in the outside region, first fuel assemblies 21a containing uranium but not containing thorium in the new fuel are loaded. That is, the new fuel which is arranged at the outside region has zero content rate of thorium.

In this way, even in a core in which the region where fuel is loaded is dividend into two, it is possible to make the power density of the inner region in the diametrical direction approach a substantially constant one and possible to fully burn the fuel of the peripheral part even in a core with a short axial direction length of the core. In the core shown in FIG. 13, when viewing the core from a plan view, the core is divided substantially equally by length in the diametrical direction whereby an inside region and an outside region are defined, but the invention is not limited to this. It need not be squally dividend.

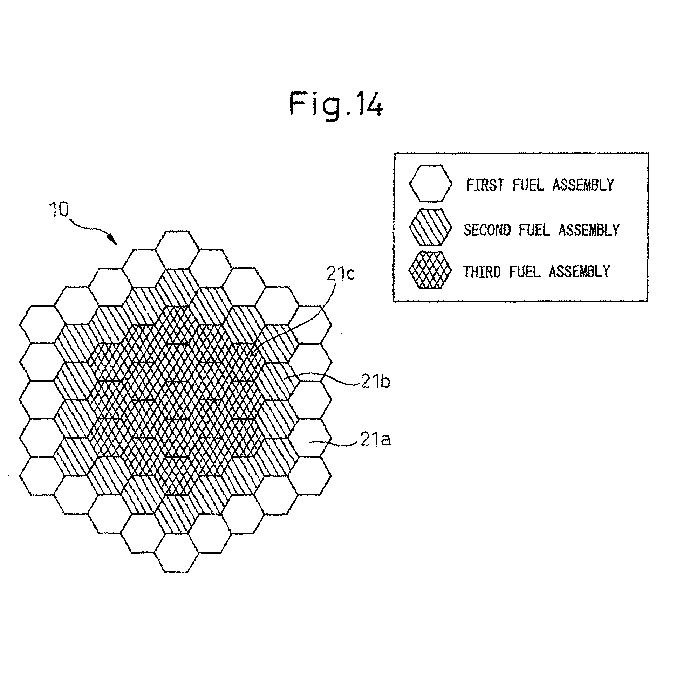

FIG. 14 is a schematic plan view of still another core in the present embodiment. In the still another core, the first fuel assemblies 21a, the second fuel assemblies 21b, and the third fuel assemblies 21c are loaded. The fuels of the first fuel assemblies 21a, the second fuel assemblies 21b, and the third fuel assemblies 21c are formed so that the weight of uranium per unit volume of the new fuel becomes smaller in that order.

At the centermost part of the core, the third fuel assemblies 21c are loaded. In the still other core shown in FIG. 14, the region of fuel which is arranged at the centermost position becomes larger compared with the core shown in FIG. 2. The fuel which is arranged at the centermost position is preferably arranged in as large a region as possible so long as the power distribution in the diametrical direction is maintained substantially constant. Due to this configuration, it is possible to increase the region in which fuel of the same composition is loaded. As explained above, it is possible to keep the burning velocity of the burning part from changing in the diametrical direction due to differences in composition of the fuel.

In the region of the second fuel assemblies 21b outside of the third fuel assemblies 21c arranged at the centermost position, it is preferable to adjust the weight of uranium etc. per unit volume so that the integral value of the power density integrated in the axial direction becomes as equal as possible with the region of the third fuel assemblies 21c. Further, the first fuel assemblies 21a which are arranged at the outermost circumference are preferably formed so that the weight of uranium per unit volume of the core becomes higher than the other fuel assemblies.

As a core in which the weight of uranium per unit volume of the center part is made smaller than the weight of uranium per unit volume of the peripheral part, in addition to mixing in thorium instead of uranium as explained above, for example, it is possible to change the ratio of the mixed metal and metal uranium in the metal fuel. For example, when the fuel is formed from zirconium and metal uranium, it is possible to employ a fuel which increases the content rate of zirconium and reduces the content rate of uranium. By configuring the core so that the content rate of uranium of the new fuel part becomes smaller at the center part than the peripheral part, it is possible to reduce the weight of uranium per unit volume of the center part. Note that, zirconium has the property of a small absorption cross section of neutrons. For this reason, even when increasing the content rate of zirconium so as to adjust the content rate of uranium in the fuel assemblies, it is possible to reduce the effects of absorption of neutrons.

Further, it is possible to employ fuel which contains two or more types of metals other than uranium. For example, it is possible to employ fuel in which part of the zirconium is replaced with molybdenum or another metal. By changing the content rate of metals other than uranium, it is possible to change the effect of absorption of neutrons. For example, when the fuel includes zirconium and molybdenum, it is possible to employ a fuel with a large content rate of molybdenum and a small content rate of zirconium at the center part and employ a fuel with a small content rate of molybdenum and a large content rate of zirconium at the peripheral part so as to make the powder density in the diametrical direction approach a constant one. In this case, it is possible to reduce changes in the weight of uranium per unit volume in the diametrical direction. Due to this configuration, it is possible to make the velocity of movement of the burning part close to substantially constant across the diametrical direction. It is possible to make the position of the burning part in the axial direction approach a constant one.

Further, it is possible to increase the amount of coolant per unit volume at the center part over the amount of coolant per unit volume at the peripheral part. For example, by increasing the distance between fuel rods of the fuel assemblies arranged at the center part, it is possible to increase the amount of coolant per unit volume at the center part. That is, it is possible to increase the volume ratio of the coolant at the center part over the volume ratio of the coolant at the peripheral part. By increasing the amount of coolant per unit volume at the center part, the weight of uranium per unit volume becomes smaller, the power density at the center part is suppressed, and the power density in the diametrical direction can be made closer to a substantially constant one. Further, the diameter of the fuel rods of the fuel assemblies at the center part may be made smaller than the diameter of the fuel rods of the fuel assemblies at the peripheral part. By making the diameter of the fuel rods at the center part smaller, it is possible to increase the flow path of coolant between fuel rods. For this reason, it is possible to increase the amount of coolant per unit volume. Further, it is possible to reduce the diameter of the fuel rods at the center part so as to reduce the weight of uranium per unit volume loaded at the center part.

Further, to make the power density in the diametrical direction approach a constant one, it is possible to change the material or shape of the support members of the fuel. For example, it is possible to form the support members of the fuel assemblies loaded at the center part of the core by a material having a larger absorption cross section of fast neutrons than the support members of the fuel assemblies loaded at the peripheral part. Further, they may be formed so that the weight of the support members per unit volume at the center part becomes larger than the weight of the support members per unit volume of the peripheral part. For example, they may be formed so that the thickness of the cladding material of the center part of the core becomes greater than the thickness of the cladding material of the peripheral part of the core.

In this way, the new fuel part may include at least one core component among component substances of the fuel pellets other than uranium, support members, and coolant. The core components may be formed so that the infinite neutron multiplication factor of the peripheral part becomes larger than the center part. The infinite neutron multiplication factor can, for example, be calculated by defining a predetermined region around any point of the core. By selecting the core components, it is possible to increase the infinite neutron multiplication factor at a predetermined region around any point of the peripheral part compared with the infinite neutron multiplication factor at a predetermined region around any point of the center part. In this case, the weight of the uranium per unit volume in the diametrical direction is preferably substantially constant. Due to this configuration, it is possible to make the power distribution in the diametrical direction closer to a substantially constant one.

As component substances of the fuel pellets other than uranium, the above-mentioned zirconium and other metals may be illustrated. Further, as fuel support members, the above-mentioned cladding material, support grids, etc. may be illustrated.

Further, the core components of the new fuel part can be formed so that the infinite neutron multiplication factor becomes gradually smaller in the direction from the peripheral part to the center part. Due to this configuration, it is possible to make the power distribution in the diametrical direction closer to a constant one.

The fuel in the present embodiment was explained with reference to natural uranium as an example, but the invention is not limited to this. It is also possible to use at least one of natural uranium and depleted uranium to perform CANDLE burning. Further, the present invention can also be applied to any fast neutron reactor which enables CANDLE burning.

In the present embodiment, the burning part of the previous cycle was arranged at the top of the new fuel part at the beginning of the burning cycle, but the invention is not limited to this. The new fuel part can be arranged at either end of the burning part in the axial direction of the core. Furthermore, new fuel parts may be arranged at the two ends of the burning part.

Further, in the present embodiment, the part starting to burn at the beginning of a cycle uses the fuel which was arranged at the bottom of the core at the end of the cycle of the previous cycle, but the invention is not limited to this. The part starting to burn at the beginning of a cycle may also be formed so as to spontaneously produce neutrons. For example, fuel containing a predetermined concentration of plutonium or enriched uranium etc. may also be arranged. Further, neutrons may be supplied from the outside to cause burning to start.

Further, in the core in the present embodiment, the axial direction of the core is parallel with the vertical direction, but the invention is not limited to this. The axial direction of the core may also be parallel to the horizontal direction. That is, it is also possible to lay the core in the present embodiment sideways.

Further, the core in the present embodiment inserts fuel pellets of different burnup in the fuel rods so as to form the new fuel part and a part starting to burn, but the invention is not limited to this. It is also possible to divide the fuel assemblies to form blocks and stack up blocks containing new fuel and blocks containing burning fuel in the axial direction of the core to form the core.

The core in the present embodiment is formed so that the direction of flow of the coolant and the direction of progress of the burning part become opposite to each other, but the invention is not limited to this. The direction in which the coolant flows and the direction in which the burning part proceeds may also be the same.

In the present embodiment, the explanation was given with reference to the example of a method of operation not controlling the reactivity of the core when the fuel is burning steadily, but the invention is not limited to this. It is also possible to control the reactivity. For example, it is also possible to arrange control rods to control the reactivity and thereby adjust the reactor output. Further, it is also possible to control the reactivity by changing the flow rate of the coolant. Further, it is preferable to control the reactivity at the time of starting and stopping the burning cycle.

In the present embodiment, the explanation was given with reference to the example of a core of a nuclear reactor used in a electric power generation facility, but the invention is not limited to this. It is possible to apply the present invention to a nuclear reactor in any facility. For example, it is possible to use tine core of the nuclear reactor of the present invention as the power source for a ship etc.

In the above figures, the same or corresponding parts are assigned the same reference numerals. Note that, the above embodiments are illustrations and do not limit the invention. Further, in the embodiments, changes included in the claims are intended.

Reference Signs List

> 1 nuclear reactor
> 10 core
> 11 new fuel part
> 12 burning part
> 21a fuel assembly
> 21b fuel assembly
> 21c fuel assembly
> 21d fuel assembly

**Claims**

1. A core of a nuclear reactor wherein the core is provided with a new fuel part at which new fuel is loaded and a burning part which is arranged at one side of the new fuel part and which generates neutrons to enable the fuel to burn, the new fuel includes at least one type of uranium from among natural uranium and depleted uranium, the uranium absorbs neutrons to generate plutonium which fissions to generate output, and the burning part moves in a direction toward the new fuel part while maintaining a substantially constant shape from the beginning to end of the burning cycle, wherein,
   when dividing the core, which is substantially circular when viewed by a plan view, into a center part and a peripheral part, the new fuel part is formed so that the weight of uranium per unit volume at the center part becomes smaller than the weight of uranium per unit volume at the peripheral part.

2. A core of a nuclear reactor as set forth in claim 1 wherein the new fuel part has a weight of uranium per unit volume of the core which becomes gradually smaller in the direction from the peripheral part toward the center part.

3. A core of a nuclear reactor as set forth in claim 1 wherein
   the core is provided with fuel assemblies which have new fuel parts,

among the fuel assemblies which are loaded at the center part and the fuel assemblies which are loaded at the peripheral part, at least the fuel assemblies which are loaded at the center part contain a mixture of uranium and thorium at the new fuel part, and
the content rate of uranium at the new fuel part of the fuel assemblies which are loaded at the center part is smaller than the content rate of uranium at the new fuel part of the fuel assemblies which are loaded at the peripheral part.

4. A core of a nuclear reactor as set forth in claim 1 wherein
the core is provided with support members for supporting the fuel and
the weight of the support members per unit volume of the center part is larger than the weight of the support members per unit volume of the peripheral part.

5. A core of a nuclear reactor as set forth in claim 1 wherein
coolant flows at the center part and the peripheral part and
the amount of the coolant per unit volume of the center part is larger than the amount of coolant per unit volume of the peripheral part.

6. A nuclear reactor which is provided with
a core of a nuclear reactor as set forth in claim 1 and
a reactor vessel inside of which the core is arranged.

7. A core of a nuclear reactor wherein the core is provided with a new fuel part at which new fuel is loaded and a burning part which is arranged at one side of the new fuel part and which generates neutrons to enable the fuel to burn, the new fuel includes at least one type of uranium from among natural uranium and depleted uranium, the uranium absorbs neutrons to generate plutonium which fissions to generate output, and the burning part moves in a direction toward the new fuel part while maintaining a substantially constant shape from the beginning to end of the burning cycle, wherein
the new fuel part contains at least one core component among component substances of fuel pellets other than uranium, support members for supporting the fuel, and a coolant, and,
when dividing the core, which is substantially circular when viewed in a plan view, into a center part and a peripheral part, the core components of the new fuel part are formed to become larger in infinite neutron multiplication factor of the peripheral part compared with the center part.

8. A core of a nuclear reactor as set forth in claim 7 wherein the core components of the new fuel part are formed so that the infinite neutron multiplication factor gradually becomes smaller in the direction from the peripheral part toward the center part.

9. A nuclear reactor which is provided with
a core of a nuclear reactor as set forth in claim 7 and
a reactor vessel inside of which the core is arranged.

# Fig.1

# Fig.2

| | |
|---|---|
| ⬡ | FIRST FUEL ASSEMBLY |
| ⬡ | SECOND FUEL ASSEMBLY |
| ⬡ | THIRD FUEL ASSEMBLY |
| ⬡ | FOURTH FUEL ASSEMBLY |

# Fig.3

# Fig.4

BURNED UP PART

BURNING PART

NEW FUEL PART

29
23a
28
24ac
24ab
24aa
22a
101

# Fig.5

10

n-TH CYCLE BOC

n-TH CYCLE EOC

13

101

FUEL DISCHARGED PART

12

13

11

12

NEW FUEL LOADED PART

h

r

r = 0

r = 0

# Fig.6

MAXIMUM VALUE

1.0

Kinf

NEUTRON FLUENCE

# Fig.7

NEW FUEL
PART | BURNING PART | BURNED UP PART

Kinf

1

101

CORE HEIGHT

# Fig.8

| | |
|---|---|
| —— | POWER DENSITY |
| —·—·— | NUMBER DENSITY OF URANIUM 238 |
| ————— | NUMBER DENSITY OF FP |

n-TH CYCLE BOC     n-TH CYCLE EOC     (n+1)TH CYCLE BOC     (n+1)TH CYCLE EOC

TOP END

101

BURNING PART

CORE HEIGHT

117

BOTTOM END

POWER DENSITY
NUCLIDE NUMBER DENSITY

# Fig.9

101

LOW POWER DENSITY

HIGH POWER DENSITY

BURNING PART

LOW POWER DENSITY

h

r

r=0

# Fig.10

LOW POWER DENSITY

101

HIGH POWER
DENSITY

LOW POWER DENSITY

h

r

r=0

# Fig.11

n-TH CYCLE BOC OF
COMPARATIVE EXAMPLE

n-TH CYCLE EOC OF
COMPARATIVE EXAMPLE

# Fig.12

—— PRESENT INVENTION
--- COMPARATIVE EXAMPLE

# Fig.13

| | |
|---|---|
| ⬡ | FIRST FUEL ASSEMBLY |
| ⬡ (hatched) | SECOND FUEL ASSEMBLY |

10

21a

r

21b

r/2

# Fig.14

| | |
|---|---|
| ⬡ | FIRST FUEL ASSEMBLY |
| ⬡ | SECOND FUEL ASSEMBLY |
| ⬡ | THIRD FUEL ASSEMBLY |

10

21c

21b

21a

| **INTERNATIONAL SEARCH REPORT** | International application No. |
|---|---|
| | PCT/JP2010/063130 |

A.  CLASSIFICATION OF SUBJECT MATTER
*G21C5/18*(2006.01)i, *G21C3/328*(2006.01)i, *G21C5/00*(2006.01)i

According to International Patent Classification (IPC) or to both national classification and IPC

B.  FIELDS SEARCHED

Minimum documentation searched (classification system followed by classification symbols)
G21C5/18, G21C3/328, G21C5/00

Documentation searched other than minimum documentation to the extent that such documents are included in the fields searched

| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
JDream2

C.  DOCUMENTS CONSIDERED TO BE RELEVANT

| Category* | Citation of document, with indication, where appropriate, of the relevant passages | Relevant to claim No. |
|---|---|---|
| A | Akito Nagata et al, "A feasile core design of lead bismuth eutectic cooled CANDLE fast reactor", Annals of Nuclear Energy, 2009.02.23, Vol.36, pp.562-566 | 1-9 |
| A | JP 3463100 B2 (President of Tokyo Institute of Technology), 12 March 2002 (12.03.2002), entire text; all drawings (Family: none) | 1-9 |

☐   Further documents are listed in the continuation of Box C.          ☐   See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 31 August, 2010 (31.08.10) | 07 September, 2010 (07.09.10) |

| Name and mailing address of the ISA/ | Authorized officer |
|---|---|
| Japanese Patent Office | |
| Facsimile No. | Telephone No. |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3463100 B